# EUROPEAN PATENT SPECIFICATION

(11) **EP 0 310 930 B1**
(45) Date of publication and mention of the grant of the patent: **01.06.1994**
(21) Application number: 88116000.6
(22) Date of filing: 28.09.1988
(51) Int. Cl.: G11B 5/84, G11B 5/85, G11B 5/64

(54) **Magnetic recording medium**
Magnetischer Aufzeichnungsträger
Milieu d'enregistrement magnétique

(30) Priority: 09.10.1987 JP 253797/87; 09.10.1987 JP 253800/87
(43) Date of publication of application: 12.04.1989
(73) Proprietor: MITSUBISHI DENKI KABUSHIKI KAISHA, Tokyo (JP)
(72) Inventor: Ito, Hiroki c/o Mitsubishi Denki K.K., Amagasaki Hyogo (JP); Minowa, Yoshifumi c/o Mitsubishi Denki K.K., Amagasaki Hyogo (JP); Koshirakawa, Nobutaka c/o Mitsubishi Denki K.K., Amagasaki Hyogo (JP)
(74) Representative: Lehn, Werner, Dipl.-Ing.

(56) References cited:
- EP-A- 0 015 692
- EP-A- 0 046 090
- EP-A- 0 158 338
- PATENT ABSTRACTS OF JAPAN, vol. 13, no. 332 (P-905)[3680], 26th July 1989;& JP-A-1 96 824 (MITSUBISHI ELECTRIC CORP.) 14-04-1989
- Journal of Applied Physics, 55(6), 15.03.84, page 2254-2256

## Description

The present invention relates to a magnetic recording medium and, particularly, to an improvement of a magnetic layer thereof.

A recording medium of such as γ -Fe₂ O₃ provided, by painting, on a disc substrate according to a conventional organic binder method such as disclosed in Japanese Patent Publication Nos. 14090/1969 or 18372/1970 has become incompatible with recent requirement of high density recording. Therefore, a plating method and a vaccum deposition method using feromagnetic metal or alloy thereof have been considered, as a substitution therefor, as disclosed in such as Japanese Patent Publication Nos. 6177/1982, 51173/1982 and 17292/1982.

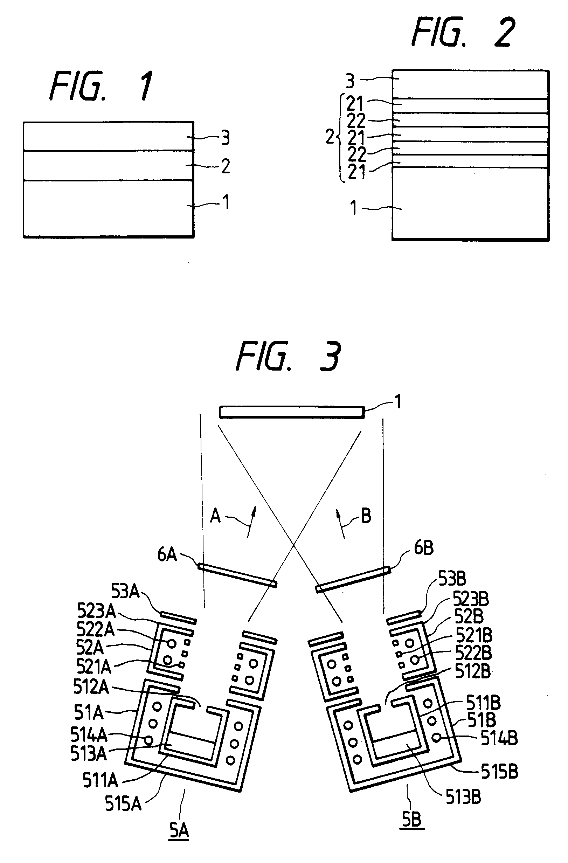

Fig. 1 illustrates a construction of a conventional magnetic recording medium shown in Japanese Patent Publication No. 43532/1981, in which a reference numeral 1 depicts a disc substrate of such as aluminum alloy, 2 a magnetic layer of feromagnetic material formed on a surface of the disc substrate 1 by the vaccum deposition method and 3 a protective layer for protecting the magnetic layer 2.

The magnetic recording medium constructed as above is adapted to be used as a hard disc device for an external memory device of a computer. The disc is driven by a spindle motor of a drive device which is not shown and information recording, reproducing or erasing is performed by a magnetic head.

In such conventional medium, an adhesion of the magnetic layer 2 to the disc substrate 1 is relatively poor and therefore there is a problem of peeling-off of the magnetic layer 2 from the disc substrate 1 by mechanical abrasion thereof by the magnetic head during a recorcing/reproducing operation.

Further, it has been usual that a surface flatness of the protective layer 3 is not enough and its friction coefficient is relatively large. Therefore, there is a problem of damage of the magnetic head and/or peeling-off of the protective layer by mechanical abrasion with the magnetic head during a contact therewith at starting and/or stopping of recording/reproducing operation, causing the magnetic layer being damaged.

### SUMMARY OF THE INVENTION

An object of the present invention is to provide a magnetic recording medium by which the peeling-off problem of the magnetic layer and the low flatness and high friction coefficient problems by repetitive abrasion with a magnetic head is eliminated.

From EP-A-0 046 090 it is known to provide two magnetic layers on a substrate to increase manufacturing efficiency and for improved magnetic properties. It is known from EP-A-0 015 692 to deposit a ferromagnetic layer on a substrate using an ionized cluster beam deposition method. Finally, the formation of a protective coating using Rhodium is shown by the Journal of Applied Physics vol. 55(6) 15.3.84, p2254-2256.

According to the present invention, there is a magnetic recording medium comprising a substrate, and a magnetic layer formed on said substrate by a cluster ion beam vapour deposition characterized by a protective layer for protecting said magnetic layer, wherein said protective layer is formed by ion beam vapour deposition, said substrate is a disc substrate, and wherein said magnetic layer comprises a lamination consisting of at least two chromium layers alternating with at least two ferromagnetic layers.

It is possible to constitute the recording medium with the vapor-deposited magnetic layer and the vapor-deposited protective layer.

According to the present invention, the magnetic layer is formed of the thin film containing cluster ions under acceleration control so that adhesion thereof to the substrate is improved. Together with the hard and flat protective layer, the present recording medium is durable and capable of being used for high density recording.

### BRIEF DESCRIPTION OF THE DRAWING

Fig. 1 illustrates a conventional recording medium in cross section;
Fig. 2 is a cross section of a recording medium according to an embodiment of the present invention;
Fig. 3 illustrates a device for producing the recording medium shown in Fig. 2;
Fig. 4 shows another embodiment of the present device; and
Fig. 5 is a cross section of another embodiment of the present invention.

### DETAILED DESCRIPTION OF THE PREFERRED EMBODIMENTS

In Fig. 2 which shows an embodiment of the present invention, a magnetic layer 2 formed by cluster ion beam deposition is composed of a alternating lamination of chromium layers 21 and thin films 22 of ferromagnetic material such as cobalt-nickel alloy. The magnetic layer 2 can be formed by an apparatus shown schematically in Fig. 3. In Fig. 3, cluster ion beam generators 5A and 5B have vapor generators 51A and 51B, ionization means 52A and 52B and ion accelerators 53A and 53B, respectively, as main constituting components. Since the cluster ion beam generators 5A and 5B have substantially the same construction, only the cluster ion beam generator 5A will be described. By substituting the suffix B for A, the same can be applied to the cluster ion beam generator 5B except vapor material.

The vapor generator 51A includes a crucible 511A in which cobalt-nickel alloy 513A is disposed as vapor substance and which has a nozzle 512A. In this connection, it should be noted that a corresponding crucible 511B of the cluster ion beam generator 5B contains chromium 513B as vapor material.

A heater filament 514A is associated with the crucible 511A which has a heat shield plate 515A. The ionization means 52A includes an ion deriving coil 521A, electron emission filament 522A and a heat shield plate 523A.

A shutter 6A is provided to on-off control cluster ion beam A.

The cluster ion beam generator 5A, the shutter 6A and a disc substrate 1 are disposed in a vaccum tank which is not shown and kept at a reduced pressure.

In operation, after the vacuum tank is evacuated by a vacuum system which is not shown to 0,133 Pa or lower, the crucibles 511A and 511B are heated by the filaments 514A and 514B such that vapor pressures of the vapor substances 513A and 513B in the crucibles 511A and 511B become several Torr, respectively. When the above is achieved, vapors of chromium 513A and cobalt-nickel alloy 513B are generated and jetted in reduced atmosphere pressure through the nozzles 512A and 512B. These vapors passed through the nozzles are cooled and condensed by adiabatic expansion and form clouds of atomic groups called clusters. The clusters and vapors discharged from the electron beam emission filaments 522A and 522B collide with electrons accelerated by the electron beam deriving electrodes 521A and 521B and are partially ionized. Then, they are further accelerated by the ion beam accelerator 53A and 53B, move, together with non-ionized vapor and clusters in the directions A and B, onto the disc substrate 1 and are deposited thereon.

The shutters 6A and 6B are operated to on-off control these ion beams such that the chromium layers 21 and the cobalt-nickel alloy layers 22 are formed alternately to form the magnetic layer 2 as shown in Fig. 2.

Since the magnetic layer 2 is formed by the thin film forming method which contains acceleration-controlled ions, the adhesion thereof to the substrate surface is very strong due to sputtering effect, ion injection effect obtained in a collision process of high speed ions with the substrate surface. Therefore, the magnetic layer is durable against abrasion and head crashing. Further, such magnetic layer can be formed easily, uniformly and in low cost in a low temperature process at high speed which has been impossible by the conventional vapor deposition. In this embodiment, the magnetic layer is constituted with the alternative lamination of the chromium layers 21 and the cobalt-nickel alloy layers 22. Therefore, its coercive force is large and exhibits a substantial square hysterisis characteristics.

Further, it is possible to form such magnetic layers on both surfaces of the substrate.

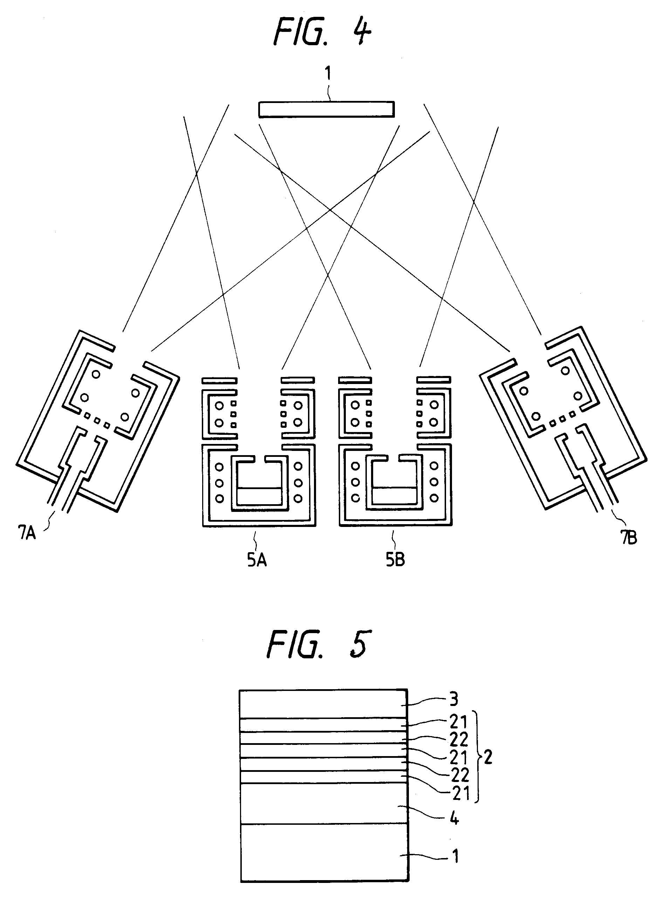

Fig. 4 shows another example of ion beam vapor deposition apparatus, schematically, for forming the protective layer 3 and/or 4, in which cluster ion beam generators 5A and 5B and gas ion beam generators 7A and 7B are used, selectively, to form a recording medium such as shown in Fig. 7.

In Fig. 4, when only the cluster ion beam generator 5A is used to evaporate silicon and nitrogen gas and methane gas as hydrocarbon gas are introduced into the ion beam generators 7A and 7B, respectively, a film of mixed crystal of silicon carbide and silicon nitride is formed on the disc substrate 1 as the protective layer 3 or 4. When the cluster ion beam generators 5A and 5B are adapted to evaporate titanium and silicon, respectively, and nitogen gas is introduced into the gas ion beam generator 7B, a film of mixed crystal of silicon nitride and titanium nitride is formed on the disc substrate 1 as the protective layer 4. In this case, the protective layer 3 may be formed similarly after the magnetic layer 2 is formed on the protective layer 4 by, for example, known vapor deposition technique.

The number of the cluster ion beam generators as well as gas ion beam generators and materials to be used therefor are arbitrarily selected on demand.

The recording medium obtained according to the present invention in which each layer is formed by the film forming method using acceleration-controlled ions exhibits a large anti-abrasion characteristics and anti-head crash characteristics due to the improved adhesion between adjacent layers.

Although the gas ion beam generator has been described as of electron beam excitation type, other gas ion source using such as micro wave or electron cyclotron resonance (ECR) type may be used.

As described hereinbefore, according to the present invention, a magnetic layer is formed on a disc substrate by the cluster ion beam vapor deposition and a protective layer therefor is formed thereon by the ion beam vapor deposition. Therefore, the adhesion between the substrate and the magnetic layer is remarkably improved, which, together with the protective layer intimately formed on the magnetic layer, results a recording medium which has high durability against a magnetic head with which it is kept in contact during operation.

## Claims

1. A magnetic recording medium comprising a substrate (1), and a magnetic layer (2) formed on said substrate (1) by a cluster ion beam vapour deposition characterized by a protective layer (4) for protecting said magnetic layer, wherein said protective layer (4) is formed by ion beam vapour deposition, said substrate is a disc substrate, and
wherein said magnetic layer (2) comprises a lamination consisting of at least two chromium layers alternating with at least two ferromagnetic layers.

2. The magnetic recording medium as claimed in claim 1, wherein said ferromagnetic layer is of cobalt-nickel alloy.

3. The magnetic recording medium as claimed in any preceding claim, wherein said protective layer (4) comprises a thin film of a material selected from a group consisting of aluminum oxide, aluminum nitride, silicon oxide, silicon nitride, silicon carbide, titanium nitride, titanium carbide, carbon and diamond or a mixture of at least two materials thereof.

4. The magnetic recording medium claimed in any preceding claim, further comprising a second protective layer formed between said disc substrate (1) and said magnetic layer (2) by gas ion beam vapour deposition.

## Patentansprüche

1. Magnetisches Aufzeichnungsmedium, mit einem Substrat (1), und einer auf dem Substrat (1) mittels Kluster-Ionenstrahldampfabscheidung gebildeten, magnetischen Schicht (2), gekennzeichnet durch eine Schutzschicht (4) zum Schützen der magnetischen Schicht, worin die Schutzschicht (4) mittels Ionenstrahldampfabscheidung gebildet ist, das Substrat ein Plattensubstrat ist, und
worin die magnetische Schicht (2) eine Schichtung umfaßt, welche aus Wenigstens zwei Chromschichten besteht, die sich mit wenigstens zwei ferromagnetischen Schichten abwechseln.

2. Magnetisches Aufzeichnungsmedium nach Anspruch 1, dadurch gekennzeichnet, daß die ferromagnetische Schicht aus einer Kobaltnickellegierung besteht.

3. Magnetisches Aufzeichnungsmedium nach einem der vorangehenden Ansprüche, dadurch gekennzeichnet, daß die Schutzschicht (4) einen dünnen Film eines aus einer Gruppe bestehend aus Aluminiumoxid, Aluminiumnitrid, Siliziumoxid, Siliziumnitrid, Siliziumcarbid, Titannitrid, Titancarbid, Kohlenstoff und Diamant oder einer Mischung von wenigstens zwei Materialien davon, gewählten Materials umfaßt.

4. Magnetisches Aufzeichnungsmedium nach einem der vorangehenden Ansprüche, gekennzeichnet durch eine zwischen dem Plattensubstrat (1) und der magnetischen Schicht (2) mittels Gasionenstrahldampfabscheidung gebildete, zweite Schutzschicht.

## Revendications

1. Milieu d'enregistrement magnétique comprenant un substrat (1), et une couche magnétique (2) formée, sur ledit substrat (1), par dépôt en phase vapeur de faisceaux d'ions en agrégats, caractérisé par une couche protectrice (4) pour protéger ladite couche magnétique, milieu dans lequel ladite couche protectrice (4) est formée par dépôt en phase vapeur de faisceaux d'ions, dans lequel ledit substrat est un substrat en forme de disque, et
dans lequel ladite couche magnétique (2) comprend un stratifié constitué d'au moins deux couches de chrome alternant avec au moins deux couches ferromagnétiques.

2. Milieu d'enregistrement magnétique selon la revendication 1 dans lequel ladite couche ferromagnétique est une couche d'alliage cobalt-nickel.

3. Milieu d'enregistrement magnétique selon l'une quelconque des revendications précédentes, dans lequel ladite couche protectrice (4) comprend un film fin d'un matériau choisi dans un groupe comprenant l'oxyde d'aluminium, le nitrure d'aluminium, l'oxyde de silicium, le nitrure de silicium, le carbure de silicium, le nitrure de titane, le carbure de titane, le carbone et le diamant ou un mélange d'au moins deux de ces matériaux.

4. Milieu d'enregistrement magnétique selon l'une quelconque des revendications précédentes, comportant en outre une seconde couche protectrice formée, par dépôt en phase vapeur de faisceaux d'ions formant un gaz, entre ledit substrat en forme de disque (1) et ladite couche magnétique (2).
